# EUROPÄISCHE PATENTSCHRIFT

(11) **EP 1 311 460 B1**
(45) Veröffentlichungstag und Bekanntmachung des Hinweises auf die Patenterteilung: **03.11.2004**
(21) Anmeldenummer: 01965168.6
(22) Anmeldetag: 03.08.2001
(51) Int. Cl.: C03C 25/32

(54) **SCHLICHTEZUSAMMENSETZUNG, BESCHLICHTETE GLASFASERN SOWIE DEREN VERWENDUNG**
SIZING COMPOSITION, SIZED GLASS FIBRES AND THE USE THEREOF
COMPOSITION D'ENDUIT, FIBRES DE VERRE ENDUITES ET UTILISATION

(30) Priorität: 16.08.2000 DE 10039750
(43) Veröffentlichungstag der Anmeldung: 21.05.2003
(73) Patentinhaber: Bayer Aktiengesellschaft, 51368 Leverkusen (DE); BAYER ANTWERPEN N.V., 2040 Antwerpen (BE)
(72) Erfinder: AUDENAERT, Raymond, B-9220 Hamme (BE); SIMON, Joachim, 40589 Düsseldorf (DE); JOACHIMI, Detlev, 47800 Krefeld (DE); KARBACH, Alexander, 47800 Krefeld (DE); BIENMÜLLER, Matthias, 47803 Krefeld (DE); GONZALEZ-BLANCO, Juan, 50937 Köln (DE)
(74) Vertreter: Feldhues, Michael L.F., Dr.
(86) Internationale Anmeldenummer: PCT/EP2001/008995
(87) Internationale Veröffentlichungsnummer: WO 2002/014236

(56) Entgegenhaltungen:
- US-A- 2 723 208
- US-A- 2 778 764
- US-A- 3 143 405
- US-A- 3 445 441
- US-A- 3 676 287
- US-A- 5 804 313
- US-A- 5 824 413

## Beschreibung

Die vorliegende Erfindung betrifft Schlichtezusammensetzungen, beschlichtete Glasfasem sowie ihre Verwendung.

Die Eigenschaften von Verbunden aus Glasfasern und Polymeren werden in hohem Maße von der Wechselwirkung zwischen Glasfaser und der die Glasfaser umgebenden Polymermatrix beeinflusst. Die Aufgabe der Schlichte besteht darin, den Verbund zwischen der Glasfaser und dem Matrixpolymer herzustellen und gleichzeitig die Herstell- und Verarbeitbarkeit der Glasfasern sicherzustellen. Als Schlichten werden Zusammensetzungen aus Wasser, polymeren Bindemitteln (den sogenannten Filmbildnern), Haftvermittlern, Gleitmitteln, Antistatika und weiteren Hilfsmitteln verwendet. Als Bindemittel verwendet man im allgemeinen organische, wasserdispergierbare oder - lösliche Polyvinylacetat-, Polyester-, Polyesterepoxid-, Polyurethan-, Polyacrylat-, Polyolefinharze oder deren Mischungen.

Allgemein werden Filmbildner und Haftvermittler so gewählt, dass eine Affinität zwischen der Polymermatrix und dem auf der Glasfaseroberfläche befindlichen Filmbildnern und/oder Haftvermittlern besteht und so ein mechanischer Verbund zwischen Glasfaser und Polymermatrix hergestellt wird.

Es versteht sich daher, dass die Rezepturen der Schlichten auf die jeweilige Polymermatrix optimiert werden müssen und dass die Eigenschaften der Verbunde empfindlich auf Veränderungen der Schlichtezusammensetzung reagieren.

Das bisher übliche Verfahren zur Herstellung von geschnittenen Glasfasern "Chopped Strand Verfahren", wie z.B. in "The Manufacturing Technology of Continuous Glass Fibres, Loewenstein, ISBN 0-444-42185-8 beschrieben, ist durch viele Zwischenschritte, bei denen die beschlichteten Glasfasern auf cakes gewickelt werden, anschließend getrocknet, evtl. zwischengelagert und danach wieder abgewickelt und geschnitten werden, sehr kostenaufwendig. Daher wird zur wirtschaftlichen Herstellung von geschnittenen Glasfasern das bekannte "Direct Chop Verfahren" angewendet, bei dem die beschlichtete Glasfaser nicht mehr auf cakes gewickelt wird, sondern unmittelbar nach dem Beschlichten geschnitten wird, wie z.B. auch in "The Manufacturing Technology of Continuous Glass Fibres, Loewenstein, ISBN 0-444-42185-8 beschrieben. Dieses Verfahren zeichnet sich besonders durch seine wirtschaftliche Herstellungsweise aus. Nachteil dieses Verfahrens ist, dass die mechanischen Verstärkungseigenschaften der im "Direct Chop Verfahren" hergestellten Glasfasern aus bisher nicht verstandenen Gründen um ca. 15-20 % niedriger liegen als die der Glasfasern, die mit den gleichen Schlichterezepturen nach dem konventionellen "Chopped Strand Verfahren" hergestellt werden.

Aufgabe der vorliegenden Erfindung war es daher, Glasfasern zur Verfugung zu stellen, die unabhängig vom Verfahren zur Herstellung geschnittener Glasfasern gleich gute Eigenschaften, insbesondere mechanische und thermische Eigenschaften, im Polymerverbund aufweisen. Insbesondere sollten die Eigenschaften der mit dem "Direct Chop Verfahren" hergestellten Glasfasern im Polymerverbund nicht schlechter sein als die Eigenschaften der mit dem "Chopped Strand Verfahren" hergestellten Glasfasern im Polymerverbund.

Diese Aufgabe konnte überraschenderweise durch die erfindungsgemäßen Schlichtezusammensetzungen gelöst werden, die neben Filmbildnern, Amino- und/oder Epoxysilanen und weiteren üblichen Schlichtebestandteilen wasserlösliche oder - dispergierbare, polymere oder mindestens oligomere Verbindungen enthalten, die Amino- und/oder Amido- Gruppen enthalten.

Gegenstand der Erfindung sind Schlichtezusammensetzungen für Glasfasern mit einem pH-Wert zwischen 3 und 10 bestehend aus
a) 0,1 bis 20 Gew.-%, bevorzugt 4 bis 10 Gew.-% Polyepoxid-, Polyether-, Polyolefin-, Polyvinylacetat-, Polyacrylat- oder Polyurethanharzen oder Mischungen davon als Filmbildner,
b) 0,1 bis 10 Gew.-%, bevorzugt 0,3 bis 2 Gew.-% organofunktionellen Silanen als Haftvermittler
c) 0,1 bis 10 Gew.-%, bevorzugt 0,3 bis 2 Gew.-% wasserlöslichen oder -dispergierbaren, oligomeren oder polymeren Verbindungen mit Aminound/oder Amidogruppen aus c1) c2) und/oder c3)
   c1) Reaktionsprodukt aus Polyaminen der Formel (I) mit Acrylatverbindungen der Formel (II)

      HN(R¹)-(Z-NH-)ₐR² (I)

      wobei
      - Z: C₁-C₁₆-Alkylen, C₅-C₁₀-Cycloalkylen, Arylen oder (A-O)_{b}-A mit A = C₁-C₁₆-Alkylen und b = 1 bis 100,
      - R¹ und R²: unabhängig voneinander H, C₁-C₁₈-Alkyl oder C₅-C₁₀-Cycloalkyl und
      - a: 1 bis 10 bedeuten 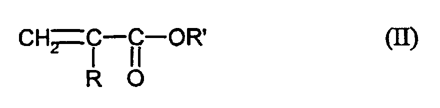
      wobei
      - R: H, CH₃
      - R': C₁-C₆-Alkyl, Aryl oder C₅-C₁₀-Cycloalkyl bedeuten
c2) Verbindungen der Formel (III) 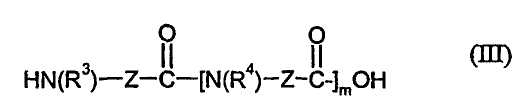 wobei
   - m: 0 bis 50
   - Z: C₁-C₁₆-Alkylen, C₅-C₁₀-Cycloalkylen, Arylen oder (A-O)_{b}-A mit A = C₁-C₁₆-Alkylen und b = 1 bis 100,
   - R³ und R⁴: unabhängig voneinander H, C₁-C₆-Alkyl oder C₅-C₁₀-Cycloalkyl bedeuten
c3) Verbindungen der Formel (IV) 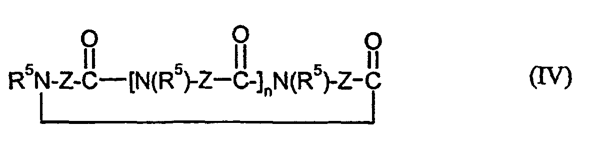 wobei
   - n: 0 bis 10,
   - Z: C₁-C₁₆-Alkylen, C₅-C₁₀-Cycloalkylen, Arylen oder (A-O)_{b}-A mit A = C₁-C₁₆-Alkylen und b = 1 bis 100,
   - R⁵: H, C₁-C₆-Alkyl oder C₅-C₁₀-Cycloalkyl bedeuten,
d) 0 bis 10 Gew.-%, bevorzugt 0,1 bis 5 Gew.-% weiteren üblichen Schlichtebestandteilen,
e) 0 bis 10 Gew.-%, bevorzugt 0 bis 5 Gew.-% Zusätzen zur Einstellung des pH-Wertes zwischen 3 und 10 und
f) Wasser als Rest auf 100 Gew. %.

Bevorzugt liegt das Verhältnis von Komponente b) zu Komponente c) im Bereich von 10:1 bis 0,1:1, besonders bevorzugt von 5:1 bis 0,5:1 und ganz besonders bevorzugt von 3:1 bis 1:1. Sehr gute Ergebnisse werden bei einem Verhältnis von b) : c) von 2:1 erhalten.

Bevorzugt wird der pH-Wert der Schlichte auf pH 5-9 eingestellt. Besonders bevorzugt ist ein pH Wert von 7. Zur Einstellung des pH-Wertes können die üblichen organischen oder anorganischen Säuren oder Basen eingesetzt werden.

Die Herstellung von oligomeren oder polymeren Amino-Amidopolymeren (vgl. Formel I/II) wird in US-A 3 445 441 beschrieben. Die Verwendung zur Verbesserung von mechanischen Eigenschaften in Glasfaser-Polymer-Verbunden wird nicht beschrieben. Die Synthese dieser Verbindungen wird auch in Dickermann, Simon, J. Org. Chem. (22), (1957), S.259-261 sowie in Sanui, Ishida, Ogata, Bull. Chem. Soc. Jpn. (41) (1968), S. 256-259 beschrieben.

Die Synthese von Verbindungen der Formel III und IV ist durch die üblichen Verfahren zur Herstellung von Oligo- oder Polyamiden möglich, die z.B. in H.G. Elias, Makromoleküle, 2. Auflage 1972, Hüthig&Wepf, Heidelberg, Seite 735 ff. beschrieben sind. Geeignete Verfahren zur Herstellung von Polyamiden sowie deren Eigenschaften werden auch in Ullmann's Encyclopedia of Industrial Chemistry, 5. Auflage, 1992, VCH-Weinheim, Vol. A 21, Seite 179 - 205 sowie in Encyclopedia of polymer science and engineering, 1988, J. Wiley & sons, Canada, Volume 21, Seite 315- 489 beschrieben.

Ein weiterer Gegenstand der Erfindung sind beschlichtete Glasfasern, die mit dem getrockneten Rückstand der erfindungsgemäßen Schlichtezusammensetzungen überzogen sind.

Die erfindungsgemäßen, beschlichteten Glasfasern werden zur Verstärkung von thermoplastischen und duroplastischen Polymeren verwendet.

Zur Herstellung der erfindungsgemäßen, beschlichteten Glasfasern sind alle für die Glasseidenfabrikation verwendeten, bekannten Glastypen, wie E-, A-, C- und S-Glas geeignet. Unter den genannten Glastypen für die Herstellung von Endlosglasfasern besitzen die E-Glasfasern aufgrund ihrer Alkalifreiheit, ihrer hohen Zugfestigkeit und ihrem hohen Elastizitätsmodul die größte Bedeutung für die Verstärkung von Kunststoffen.

Zur Beschlichtung der Glasfasern werden diese nach bekannten Verfahren mit der erfindungsgemäßen Schlichte aus:
a) 0,1 bis 20 Gew.-%, bevorzugt 4 bis 10 Gew.-% Polyepoxid-, Polyether-, Polyolefin-, Polyvinylacetat-, Polyacrylat- oder Polyurethanharzen oder Mischungen davon als Filmbildner,
b) 0,1 bis 10 Gew.-%, bevorzugt 0,3 bis 2 Gew.-% organofunktionellen Silanen als Haftvermittler
c) 0,1 bis 10 Gew.-%, bevorzugt 0,3 bis 2 Gew.-% wasserlöslichen oder -dispergierbaren, oligomeren oder polymeren Verbindungen mit Aminound/oder Amidogruppen aus c1), c2) und/oder c3),
   c1) Reaktionsprodukte aus Polyaminen der Formel (I) und Acrylatverbindungen der Formel (II)

      HN(R¹)-(Z-NH-)ₐ(R²) (I)

      wobei
      - a: 1 bis 10,
      - Z: C₁-C₁₆-Alkylen, C₅-C₁₀-Cycloalkylen, Arylen oder (A-O)_{b}-A mit A = C₁-C₁₆-Alkylen und b = 1 bis 100,
      - R¹ und R²: unabhängig voneinander H, C₁-C₁₈-Alkyl oder C₅-C₁₀-Cycloalkyl bedeuten 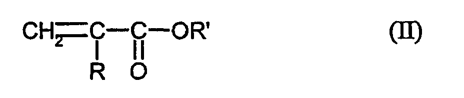
      wobei
      - R: H, CH₃
      - R': C₁-C₆-Alkyl, Aryl oder C₅-C₁₀-Cycloalkyl bedeuten
   c2) Verbindungen der Formel (III) 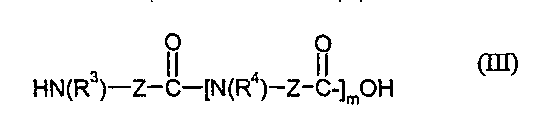 wobei
      - m: 0 bis 50
      - Z: C₁-C₁₆-Alkylen, C₅-C₁₀-Cycloalkylen, Arylen oder (A-O)_{b}-A mit A = C₁-C₁₆-Alkylen und b = 1 bis 100,
      - R³ und R⁴: unabhängig voneinander H, C₁-C₆-Alkyl oder C₅-C₁₀-Cycloalkyl bedeuten
   c3) Verbindungen der Formel (IV) 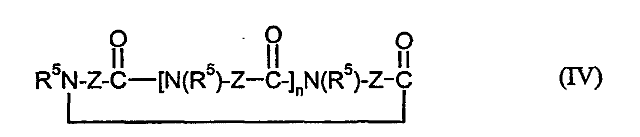 wobei
      - n: 0 bis 10,
      - Z: C₁-C₁₆-Alkylen, C₅-C₁₀-Cyctoalkylen, Arylen oder (A-O)_{b}-A mit A = C₁-C₁₆-Alkylen und b = 1 bis 100,
      - R⁵: H, C₁-C₆-Alkyl oder C₅-C₁₀-Cycloalkyl bedeuten,
d) 0 bis 10 Gew.-%, bevorzugt 0,1 bis 5 Gew.-% weiteren üblichen Schlichtebestandteilen,
e) 0 bis 10 Gew.-%, bevorzugt 0 bis 5 Gew.-% Zusätzen zur Einstellung des pH-Wertes zwischen 3 und 10 und
f) Wasser als Rest auf 100 Gew. %. versehen, anschließend geschnitten und getrocknet.

In der Schlichte können weitere Komponenten wie Emulgatoren, weitere filmbildende Harze, weitere Haftvermittler, Gleitmittel und Hilfsstoffe wie Netzmittel oder Antistatika enthalten sein.

Die weiteren Haftvermittler, Gleitmittel und sonstigen Hilfsstoffe, Verfahren zur Herstellung der Schlichten, Verfahren zur Beschlichtung und Nachbearbeitung der Glasfasern sind bekannt und beispielsweise in KL. Loewenstein, "The Manufacturing Technology of Continuous Glass Fibres", Elsevier Scientific Publishing Corp., Amsterdam, London, New York, 1983, beschrieben.

Die Glasfasern können über beliebige Methoden beschlichtet werden, beispielsweise mit Hilfe geeigneter Vorrichtungen, wie z.B. Sprüh- oder Walzenapplikatoren. Auf die mit hoher Geschwindigkeit aus Spinndüsen gezogenen Glasfilamente können beispielsweise sofort nach ihrem Erstarren, d.h. noch vor dem Aufwickeln oder Schneiden, Schlichten aufgetragen werden. Es ist aber auch möglich, die Fasern im Anschluss an den Spinnprozess in einem Tauchbad zu beschlichten.

Als Polyepoxid-Filmbildner sind wasserdispergierte, emulgierte oder in Wasser gelöste Epoxidharze geeignet. Es handelt sich dabei um unmodifizierte oder durch Amine, saure Gruppen oder hydrophil-nichtionische Gruppen modifizierte Epoxidharze auf der Basis von Diglycidylethern zweiwertiger Phenole wie Brenzkatechin, Resorcin, Hydrochinon, 4,4'-Dihydroxydiphenyldimethylmethan (Bisphenol A), 4,4'-Dihydroxy-3,3 '-dimethyl-diphenylpropan, 4,4' -Dihydroxydiphenylsulfon, Glycidylestem zweiwertiger, aromatischer, aliphatischer und cycloaliphatischer Carbonsäuren wie beispielsweise Phthalsäureanhydridbisglycidylether oder Adipinsäurebisglycidylether, Glycidylethern zweiwertiger, aliphatischer Alkohole wie Butandiolbisglycidylether, Hexandiolbisglycidylether oder Polyoxyalk-ylenglykolbisglycidylether sowie Polyglycidylethern polywertiger Phenole, beispielsweise von Novolaken (Umsetzungsprodukte von ein oder mehrwertigen Phenolen mit Aldehyden, insbesondere Formaldehyd, in Gegenwart saurer Katalysatoren), Tris-(4-hydroxyphenyl)methan oder 1,1,2,2-Tetra(4-hydroxyphenyl)ethan, Epoxid-Verbindungen auf der Basis von aromatischen Aminen und Epichlorhydrin, beispielsweise Tetraglycidylmethylendianilin, N-Diepoxypropyl-4-aminophenylglycidylether, Glycidylester mehrwertiger aromatischer, aliphatischer und cycloaliphatiseher Carbonsäuren; Glycidylether mehrwertiger Alkohole, beispielsweise von Glycerin, Trimethylolpropan, Pentaerythrit und weiteren Glycidylverbindungen wie Trisglycidylisocyanurat.

Als chemische Modifizierungen ist beispielsweise die Addition von Aminen oder die Addition von hydrophilen Polyethern, z.B. Polyethylenglykolen geeignet. Geeignete Polyepoxid-Dispersionen sind z.B. in EP-A 27 942, EP-A 311 894, US 3 249 412, US 3 449 281, US 3 997 306 und US 4 487 797 beschrieben. Bevorzugt werden in Wasser dispergierte, emulgierte oder gelöste Polyesterepoxide auf Basis von Bisphenol A und Novolaken.

Polyurethan-Filmbildner sind in Wasser dispergierte, emulgierte oder gelöste Reaktionsprodukte von bevorzugt difunktionellen Polyisocyanaten mit bevorzugt difunktionellen Polyolen und gegebenenfalls bevorzugt difunktionellen Polyaminen. Die Synthese von Polyurethan-Dispersionen, verwendbare Bausteine, die Herstellverfahren und ihre Eigenschaften sind dem Fachmann bekannt und beispielsweise in Houben-Weyl "Methoden der organischen Chemie", Band E 20, herausgegeben von H. Bartl und J. Falbe, Georg Thieme Verlag Stuttgart, New York 1987 auf den Seiten 1587 bis 1604, 1659 bis 1681, 1686 bis 1689 beschrieben.

Geeignete Isocyanate sind aliphatische, cycloaliphatische, araliphatische, aromatische und heterocyclische Polyisocyanate oder beliebige Gemische dieser Polyisocyanate, wie z.B. 1,6-Hexamethylendiisocyanat, 1-Isocyanato-3,3,5-trimethyl-5-isocyanatomethyl-cyclohexan, 2,4- und 2,6-Toluylendiisocyanat, Diphenylmethan-2,4'- und/oder -4,4'-diisocyanat und 1,6-Bis-Cyclohexylmethandiisocyanat (Desmodur® W).

Geeignete Polyole sind Polyester, also z.B. Umsetzungsprodukte von vorzugsweise zweiwertigen Polyalkoholen wie z.B. Ethylenglykol, Propylenglykol, Butylenglykol und Hexandiol mit vorzugsweise zweiwertigen Polycarbonsäuren oder deren veresterungsfähigen Derivaten wie z.B. Bernsteinsäure, Adipinsäure, Phthalsäure, Phthalsäureanhydrid, Maleinsäure und Maleinsäueranhydrid. Auch Polyester aus Lactonen, z.B. ε-Caprolactam sind einsetzbar. Polyester können auch anteilig dreiwertige Alkohole oder Carbonsäurekomponenten wie z.B. Trimethylpropan oder Glycerin enthalten, Weiterhin sind verzweigte oder unverzweigte Polyether geeignet, hergestellt z.B. durch Polymerisation von Epoxiden wie z.B. Ethylenoxid, Propylenoxid oder Tetrahydrofuran mit sich selbst oder durch Anlagerung der Epoxide an Startkomponenten mit reaktionsfähigen Wasserstoffatomen wie Wasser, Alkohole, Ammoniak oder Amine.

Als sogenannte Kettenverlängerer, d.h. vorzugsweise difunktionelle Polyole oder Polyamine mit einem Molekulargewicht von kleiner als 400, werden besonders bevorzugt zweiwertige Polyalkohole wie Ethylenglykol, Propylenglykol, Butylenglykol, Aminoalkohole wie Ethanolamin, N-Methyldiethanolamin sowie difunktionelle Amine und Polyamine wie z.B.Ethylendiamin, 1,4-Tetramethylendiamin, Hexamethylendiamin, 1-Amino-3,3,5-trimethyl-5-aminomethylcyclohexan, Bis-(3-aminopropyl)methylamin und Hydrazin eingesetzt.

Auch Epoxidgruppen oder verkappte Isocyanatgruppen (siehe z.B. EP-A 137 427) aufweisende Polyurethan-Dispersionen, -Emulsionen oder -Lösungen sind geeignet.

Polyester-Dispersionen sind bevorzugt Umsetzungsprodukte aus den vorgenannten Polyepoxiden mit den vorgenannten Polycarbonsäuren, bzw. carboxylgruppenhaltigen Polyestem (siehe z.B. EP-A 27 942), die keine Epoxidgruppen mehr enthalten.

Geeignete organofunktionelle Silane (b) sind beispielsweise 3-Aminopropyltrimethoxysilan, 3-Aminopropyltriethoxysilan, 3-Aminopropyltris-methoxy-ethoxysilan, 3-Aminopropyl-methyl-diethoxysilan, N-2-Aminoethyl-3-aminopropyltrimethoxysilan, N-2-Aminoethyl-3-aminopropyl-methyl-dimethoxysilan, N-Methyl-3-amintipropyltrimethoxysilan, 3-Glycidyloxypropyltrimethoxysilan, 3-Methacryloxypropyltrimethoxysilan, 3-Mercaptopropyltrimethoxysilan, Vinyltriethoxysilan und Vinyltrimethoxysilan oder oligomere oder polymere aminofunktionelle Silanverbindungen sind z.B. Oligo-Amino-Amid-Silane wie A1387 der Fa. Witco.

Geeignete Verbindungen als Komponente c) sind amino-amidofunktionelle Verbindungen wie z.B unvemetzte, lösliche Oligo- oder Polyamide mit freien endständigen, gegebenenfalls protonierten Aminogruppen, die in organischer Lösung lagerstabil sind, und die in wässrigen Lösungsmitteln stabile Lösungen, Suspensionen oder Dispersionen ergeben, wie sie durch Reaktion von Diaminen mit Dicarbonylverbindungen wie z.B. Dicarbonsäuren oder Dicarbonsäurehalogeniden oder auch durch ringöffnende Polymerisation von Lactamen erhältlich sind. Derartige Verbindungen fallen zum Teil als Nebenprodukt bei der Produktion von Polyaminen, z.B. Polyamid 6 und Polyamid 6,6 an. Insbesondere die Kombination von freien Aminogruppen, und einer oder mehreren Amidgruppen führt dabei zu herausragenden Eigenschaften der Schlichte. Besonders bevorzugt sind hierbei offenkettige und cyclische Verbindungen mit mittleren Molgewichten und mehr als einer Amidgruppe pro Molekül.

Amino-Amidoverbindungen sind zum Beispiel erhältlich durch ringöffnende Reaktion von Lactamen wie 2-Azetidinon, 2-Pyrrolidon, 2-Piperidon, ε-Caprolactam, 7-Heptanlactam, 8-Octanlactam, 12-Dodecanlactam sowie auch durch ringöffnende Polymerisation substituierter Lactame wie 4,4-Dimethyl-2-Azetidinon, N-Alkyl-Lactame, sowie aller Isomeren von Methyl-ε-Caprolactam. Eine Zusammenfassung geeigneter Methoden, Monomere und Verfahren zur Lactampolymerisation ist z.B. in Houbel-Weyl, Methoden der Organischen Chemie, Band E 20 Makromolekulare Stoffe, 4. Auflage, 1987, Teilband 2, Seite 1504 ff. gegeben. Besonders bevorzugt sind Amino-Amidverbindungen erhältlich durch ringöffnende Reaktion von ε-Caprolactam.

Geeignete Verbindungen als Komponente c) sind auch amino-amidoftmktionelle, lösliche oder in Wasser suspendier- oder dispergierbare Verbindungen erhältlich durch Reaktion von Diamino- oder Polyaminoverbindungen mit Acrylat-Verbindungen.

Als Diaminoverbindungen werden bevorzugt Amine folgenden Typs eingesetzt:

NH₂(-Z-NH)ₐ-H

wobei
- a: 1 bis10
- Z: (CH₂)_{b}, -CH(CH₃)-CH₂-, -CH₂-CH(CH₃)-CH₂-,
mit b = 2 bis 12.

Geeignet sind unter anderem 1,2-Diaminoethan (Ethylendiamin), 1,3-Diaminopropan, 1,4-Diaminobutan, 1,5-Diaminopentan, 1,6-Diaminohexan (Hexamethylendiamin), 1,7-Diaminoheptan, 1,8-Diaminooctan, 1,9-Diaminononan, 1,10-Diaminodecan, 1,11-Diaminoundecan, 1,12-Diaminododecan, 1-Methyl-1,2-diaminoethan, 2-Methyl-1,3-diaminopropan, 1,2-Diaminopropan, 2,2-Dimethyl-1,3-propandiamin, 1,2-Diamino-2-methylpropan. Besonders geeignet ist Ethylendiamin. Geeignet sind auch die höherfunktionellen Amine mit a> 1.

Außerdem eignen sich vorzugsweise auch alkylierte Aminoverbindungen folgender Formel:

R¹NH-(Z-NH-)ₐR²

wobei
- R¹ und R²: unabhängig voneinander H, C₁-C₁₈-Alkyl, Cyclohexyl und Cyclopentyl
- a: 1 bis 10
- Z: C₁-C₁₆-Alkylen, C₅-C₁₀-Cycloalkylen oder Arylen.

Der hierbei besonders bevorzugte Typ besitzt die Struktur

R¹NH-(Z-NH-)ₐH

wobei
- R¹: H, C₁-C₁₈-Alkyl und
- a: 1 bis 10 und
- Z: C₁-C₁₆-Alkylen, Arylen oder C₅-C₁₀-Cycloalkylen bedeuten.

Beispielsweise gut geeignet sind N-Methylethylendiamin, N-Ethylethylendiamin, N-Propylethylendiamin, N-Butylethylendiamin, N-Pentylethylendiamin, N-Hexylethylendiamin, N-Octylethylendiamin, N,N-Dimethylethylendiamin, N,N'-Diethylethylendiamin, N,N'-Dipropylethylendiamin, N,N'-Dibutylethylendiamin, N,N'-Diethyl-1,3-Propandiamin, 2-Butyl-2-Ethyl-1,5-pentanediamin, N-(3-Aminopropyl)-1,3-propandiamin, N-Methyl-1,3-propandiamin, N-Propyl-1,3-propandiamin, N,N'-Dimethyl-1,6-hexandiamin, Diethylentriamin, N-(2-Aminoethyl)-1,3-Propandiamin, Spermidin, N-Isopropyl-1,3-Propandiamin, N,N'-Dirnethyl-1,3-propandiamin, 3,3'-Diamino-N-methyldipropylamin, Bis(Hexamethylen)-triamin, Spermin, N,N'N'-Trimethylbis(Hexamethylen)-triamin, N,N'-Bis(3-Aminopropyl)-ethylendiamin, Pentaethylenhexamin, 4-(Aminomethyl)-1,8-octandiamin, N,N'-Bis(2-Aminoethyl)1,3-propandiamin, Tris(2-Aminoethyl)amin, Tetraethylenpentamin, 1,3-Cyclohexanbis(Methylamin), 1,2-Diaminocyclohexan.

Geeignet sind auch Aminoverbindungen der Struktur

NH₂(A-O-)_{c}-A-NH₂

wobei
- A: C₁-C₁₆-Alkylen,
- c: 1 bis 100 bedeuten.

Die Polyetherketten dieser Verbindungen bestehen bevorzugt zumindest zu 80 Gew.-%, besonders bevorzugt 100 Gew.-%, aus Ethylenoxideinheiten, wobei neben diesen auch Propylenoxideinheiten vorliegen können. Bevorzugte Verbindungen sind beispielsweise Polyethylenglykole mit Molekulargewichten von 300 bis 6 000 (z.B. Carbowax® 300, 400, 1000, 1500, 2000, 6000 von Union Carbide), difunktionelle Etherdiamine, wie z.B. 4,7-Dioxadecan-1,10-diamin,4,9-Dioxadodecan-1,12-diamin, 4,7,10-Trioxadecan-1,13-diamin, Bis-(3-aminopropyl)-polytetrahydrofuran, (Produkte Carbowax®750, 1100, 2100 von BASF) sowie Polyetheramine (z.B. Jeffamin®D 230, D 400, D 2000, XTJ 510 (D 4 000), ED 600, ED 900, ED 2003, ED 4000, EDR 148 (XTJ 504) von Texaco Chemical Company).

Ganz besonders bevorzugt sind folgende difunktionelle Etherdiamine: 4,7-Dioxadecan-1,10-diamin; 4,9-Dioxadodecan-1,12-diamin; 4,7,10-Trioxadecan-1,13-diamin; Bis-(3-aminopropyl)-polytetrahydrofuran 750, Bis-(3-aminopropyl)-polytetrahydrofuran 1 100, Bis-(3-aminopropyl)-polytetrahydrofuran 2 100 von BASF und Jeffamine®D 230, D 400, D 2 000, XTJ 510 (D 4000), ED 600, ED 900, ED 2003, ED 4000, EDR 148 (XTJ504) von Texaco Chemical Company.

Zusätzlich können weitere Schlichtekomponenten (d) wie anionische, kationische oder nichtionische Emulgatoren, weitere filmbildende Harze, Gleitmittel wie z.B. Polyalkylenglykolether von Fettalkoholen oder Fettaminen, Polyalkylenglykolester und Glycerinester von Fettsäuren mit 12 bis 18 C-Atomen, Polyalkylenglykole höherer Fettsäureamide mit 12 bis 18 C-Atomen von Polyalkylenglykolen und/oder Alkenylaminen, quartäre Stickstoffverbindungen z.B. ethoxylierte Imidazoliniumsalze, Mineralöle oder Wachse und Hilfsstoffe wie Netzmittel oder Antistatika wie z.B. Lithiumchlorid oder Ammoniumchlorid in den Schlichten enthalten sein. Diese weiteren Hilfsstoffe sind dem Fachmann bekannt und beispielsweise in K.L. Loewenstein, "The Manufacturing Technology of Continuous Glass Fibres", Elsevier Scientific Publishing Corp., Amsterdam, London, New York, 1983, beschrieben.

Die erfindungsgemäßen Glasfasern sind als Verstärkungsfasern für thermoplastische Polymere wie z.B. Polycarbonate, Polyamid-6 und Polyamid-6,6, aliphatische, aromatische und gemischt aliphatisch/aromatische Polyesteramide, aliphatische, aromatische und gemischt aliphatisch/aromatische Polyester wie z.B. Polyethylenterephthalat und Polybutylenterephthalat, Polyurethane, Polyarylensulfide oder Polycycloolefine sowie duroplastische Polymere wie ungesättigte Polyesterharze, Epoxidharze und Phenol-Formaldehydharze geeignet.

Die Erfindung soll anhand der nachfolgenden Beispiele näher erläutert werden.

### Beispiel 1: Herstellung der Komponente c1)

2,2 Mol Ethylendiamin werden unter Kühlung bei 20°C vorgelegt. Dazu werden 4,0 Mol Acrylsäuremethylester unter Kühlung bei 20°C langsam zugetropft. Nach 1 Stunde Rühren bei Raumtemperatur wird nochmals 1,8 Mol Ethylendiamin bei Raumtemperatur zugetropft. Es wird auf 160°C aufgeheizt und über eine Kolonne das Methanol (84,9 g) abdestilliert. Es verbleibt ein Rückstand von 411,2 g, der in Methanol oder Wasser löslich ist. Die Analytik durch Titration ergibt 5,86 Gew.-% freien basischen Stickstoff bei 13,2 % Gesamt-Stickstoff.

### Beispiel 2 (Vergleich):

### Herstellung der beschlichteten Glasfaser ("Chopped Strand Verfahren")

Die Schlichte (Zusammensetzung siehe Tabelle 1) wurde über einen Kiss-Roll-Applikator auf Glasfasern mit einem Durchmesser von 14 µm aufgebracht. Die Glasfasern wurden zu Cakes aufgewickelt und anschließend 10 Stunden bei 130°C getrocknet. Die Glasfasern wurden nach der Trocknung in 4,5 mm lange Chops geschnitten ("Chopped Strand Verfahren").

### Beispiel 3 (Vergleich):

### Herstellung der beschlichteten Glasfaser ("Direct Chop Verfahren")

Die gleiche Schlichte wie in Beispiel 2 (siehe Tabelle 1) wurde über einen Kiss-Roll-Applikator auf die Glasfasern mit einem Durchmesser von 14 µm appliziert. Die Glasfasern wurden direkt nach dem Applikator im Direkt Chopper geschnitten und anschließend 10 Stunden bei 130°C getrocknet ("Direct Chop Verfahren").

Die Glasfasern gemäß Beispiel 2 und 3 wurden auf einem Extruder bei einer Extrudertemperatur von 250°C zu einer Formmasse bestehend aus 70 Gew.-Teilen Polyamid 6 (Durethan®, Handelsprodukt der Fa. Bayer AG, Leverkusen) und 30 Gew.-Teilen Glasfaser aus Beispiel 1 bzw. Beispiel 2 extrudiert und granuliert.

Von den Formmassen wurden auf einer üblichen Spritzgussmaschine 80 x 10 x 4 mm-Prüf- und Zugstäbe hergestellt. Geprüft wurden Biegefestigkeit nach DIN 53452, Zugfestigkeit nach DIN 53455 sowie die Schlagzähigkeit bei Raumtemperatur nach Izod (ISO 180/IC).

Die Ergebnisse sind der Tabelle 2 zu entnehmen.

**Tabelle 1**

| Schlichtekomponenten | Mengenangaben in Gew.-% | |
|---|---|---|
| | Beispiel 2 | Beispiel 3 |
| Polyurethan-Dispersion Baybond ® PU 0401 (Handelsprodukt der Fa. Bayer AG ) | 4 | 4 |
| 3-Aminopropyltriethoxysilan | 1 | 1 |
| Gleitmittel (Polyalkylenglykol) | 0,5 | 0,5 |
| Wasser | 94,5 | 94,5 |
| Schlichteauftrag (Bestimmung durch Glühverlust) | 0,70 | 0,70 |

**Tabelle 2**

| Formmasse mit | Biegefestigkeit in [MPa] | Zugfestigkeit in [MPa] | Schlagzähigkeit in [kJ/m²] |
|---|---|---|---|
| Glasfasern aus Beispiel 2 | 180 | 276 | 56 |
| Glasfasern aus Beispiel 3 | 165 | 257 | 46 |

Tabelle 2 zeigt das niedrigere mechanische Eigenschaftsniveau von Glasfasern aus Beispiel 3.

### Beispiel 4

Die Schlichten bestanden aus den Komponenten gemäß Tabelle 3 und wurden über einen Kiss-Roll-Applikator auf Glasfasern mit einem Durchmesser von 11 µm aufgebracht. Die Glasfasern wurden anschließend im Direct Chopper geschnitten und anschließend bei 130°C getrocknet.

**Tabelle 3**

| Schlichtekomponente (Mengenangaben in Gew. %) | **Beispiele** | | | | | |
|---|---|---|---|---|---|---|
| | 4.1. | 4.2. | 4.3. | 4.4. | 4.5. | 4.6. |
| 3-Aminopropyltriethoxysilan (A1100, Handelsprodukt der Fa. Witco,USA) | 1 | 1 | 1 | 1 | 1 | 1 |
| Polyamino-amidsilan (A1387,Handelsprodukt der Fa. Witco) | - | 0,5 | - | - | 0,5 | - |
| Verbindung aus Beispiel 1 | - | - | 0,5 | - | - | 0,5 |
| Dispersion aus Beispiel 7 | - | - | - | 6 | 6 | 6 |
| Polyurethandispersion (Baybond® PU 0401, Handelsprodukt der Fa. Bayer AG) | 4 | 4 | 4 | - | - | - |
| Wasser | 95 | 94,5 | 94,5 | 93 | 92,5 | 92,5 |
| PH-Wert | PH7 | pH7 | pH7 | pH7 | pH7 | PH7 |

### Beispiels 5

70 Gew.-Teile Polyamid 6 (Durethan®, Fa. Bayer AG) und 30 Gew.-Teile Glasfasern aus den Beispielen 4.1, 4.2 und 4.3 wurden auf einem Extruder bei einer Extrudertemperatur von 250°C zu einer Formmasse extrudiert und granuliert. Von den Formmassen wurden auf einer üblichen Spritzgussmaschine 80 x 10 x 4 mm-Prüf- und Zugstäbe hergestellt. Geprüft wurden Biegefestigkeit nach DIN 53 452, Zugfestigkeit nach DIN 53 455 sowie die Schlagzähigkeit bei Raumtemperatur nach Izod (ISO 180/IC).

| **Formmasse mit Glasfasern aus** | **Zugfestigkeit [MPa]** | **Biegefestigkeit [MPa]** | **Schlagzähigkeit [kJ/m**^{**2**}**]** |
|---|---|---|---|
| Beispiel 4.1. | 165 | 261 | 51 |
| Beispiel 4.2. | 181 | 276 | 61 |
| Beispiel 4.3. | 181 | 276 | 61 |

Beispiele 4.2 und 4.3 zeigen ein vergleichbar hohes mechaniches Eigenschaftsniveau im Gegensatz zu Beispiel 4.1.

### Beispiel 6

70 Gew. -Teile thermoplastisches Polyester (Pocan® B1200, Fa. Bayer AG) und 30 Gew.-Teile Glasfasern aus den Beispielen 4.4, 4.5 und 4.6. wurden auf einem Extruder bei einer Extrudertemperatur von 250°C zu einer Formmasse extrudiert und granuliert. Von der Formmasse wurden auf üblichen Spritzgussmaschine 80 x 10 x 4 mm-Prüf- und Zugstäbe hergestellt. Geprüft wurden Biegefestigkeit nach DIN 53 452, Zugfestigkeit nach DIN 53 455 sowie die Schlagzähigkeit bei Raumtemperatur nach Izod (ISO 180/IC).

| **Formmasse mit Glasfasern aus** | **Zugfestigkeit [MPa]** | **Biegefestigkeit [MPa]** | **Schlagzähigkeit [kJ/m**^{**2**}**]** |
|---|---|---|---|
| Beispiel 4.4. | 147 | 228 | 42 |
| Beispiel 4.5. | 155 | 239 | 47 |
| Beispiel 4.6. | 155 | 240 | 47 |

Die Beispiele 4.1/4.4 zeigen deutlich, dass die mit Glasfasern verstärkten Kunststoffe schlechtere mechanische Eigenschaften aufweisen, wenn die Glasfasern nach dem "Direct Chop Verfahren" hergestellt wurden. Die verstärkten Kunststoffe, die nach dem "Chopped Strand Verfahren" hergestellte Glasfasern (Beispiel 2) enthalten, weisen bessere mechanische Eigenschaften bei gleicher Rezeptur der Schlichte auf (siehe Beispiel 2 im Vergleich zu Beispiel 3).

Die Beispiele 5 und 6 zeigen, dass Kunststoffe, die mit nach dem "Direct Chop Verfahren" hergestellten Glasfasern verstärkt sind, verbesserte mechanische Eigenschaften aufweisen, wenn die Glasfasern mit den erfindungsgemäßen Schlichten beschlichtet worden sind (siehe Beispiele 4.3 und 4.6 im Vergleich zu 4.1 und 4.4).

Im Gegensatz zur Meinung der Fachwelt, dass verbesserte mechanische Eigenschaften bei Verwendung von nach dem "Direct Chop Verfahren" hergestellten Glasfasern nur erreicht werden können, wenn als Schlichtebestandteile teure und nur sehr aufwendig zu synthetisierende, oligomere, Silanolfunktionalitäten enthaltende Verbindungen eingesetzt werden, kann dieses Ziel auch mit den erfindungsgemäßen Schlichten erreicht werden (siehe Beispiele 4.3 und 4.6 im Vergleich zu Beispielen 4.2 und 4.5). Außerdem sind die erfindungsgemäßen Schlichten erheblich besser zu handhaben. Durch die Neigung der bisher verwendeten oligomeren Silane zur Vernetzung konnten die die oligomeren Silane enthaltenden Schlichten nur sehr verdünnt und in inerten Lösungsmitteln gehandhabt werden.

### Beispiel 7 Herstellung einer Polyesterdispersion

In einen Dreihalskolben mit mechanischem Rührer und Innenthermometer werden 77,5 g eines Polyethylenglykols mit einem mittleren Molekulargewicht von 1550 g/Mol und 10 g Bernsteinsäureanhydrid zusammengegeben, auf 100°C erhitzt und bis zur Säurezahl 68 mg KOH/g gerührt. Es werden 312,5 g eines epoxidierten Novolakes auf der Basis von Phenol und Formaldehyd mit einem Epoxidäquivalentgewicht von 175 g/Äquivalent und 1 g Natriumcarbonat zugegeben und bis zur Säurezahl 0 gerührt. Das fertige Epoxidharz besitzt einen Gehalt an Epoxidgruppen von 0,42 Mol pro 100 g Harz und im Mittel eine Funktionalität von ca. 3,0 Epoxidgruppen pro Molekül. Die Temperatur im Reaktionskolben wird auf 60°C gesenkt und 600 ml ca. 70°C warmes Wasser in Portionen von ca. 100 ml zugegeben.

Es entsteht eine weisse, homogene, feinteilige und lagerstabile Dispersion mit einer Viskosität von ca. 20 mPa.s.

## Patentansprüche

1. Schlichtezusammensetzung für Glasfasern mit einem pH-Wert zwischen 3 und 10 bestehend aus:
a) 0,1 bis 20 Gew.-% Polyepoxid-, Polyether-, Polyolefin-, Polyvinylacetat-, Polyacrylat- oder Polyurethanharzen oder Mischungen davon als Filmbildner,
b) 0,1 bis 10 Gew.-% organofunktionellen Silanen als Haftvermittler,
c) 0,1 bis 10 Gew.-% wasserlöslichen oder -dispergierbaren, oligomeren oder polymeren Verbindungen mit Amino- und/oder Amidogruppen aus c1), c2) und/oder c3)
c1) Reaktionsprodukt aus Polyaminen der Formel (I) mit Acrylatverbindungen der Formel (II)
HN(R¹)-(Z-NH-)ₐR² (I)
wobei
Z C₁-C₁₆-Alkylen, C₅-C₁₀-Cycloalkylen, Arylen oder (A-O)_{b}-A mit A = C₁-C₁₆-Alkylen und b = 1 bis 100,
R¹ und R² unabhängig voneinander H, C₁-C₁₈-Alkyl oder C₅-C₁₀-Cycloalkyl und
a 1 bis 10 bedeuten 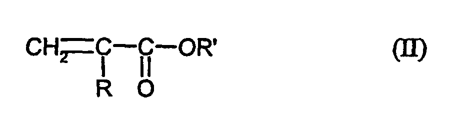
wobei
R H, CH₃
R' C₁-C₆-Alkyl, Aryl oder C₅-C₁₀-Cycloalkyl bedeuten
c2) Verbindungen der Formel (III) 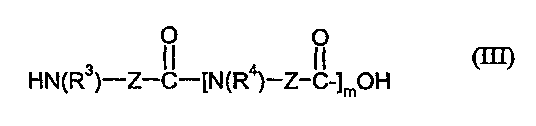 wobei
m 0 bis 50
Z C₁-C₁₆-Alkylen, C₅-C₁₀-Cycloalkylen, Arylen oder (A-O)_{b}-A mit A = C₁-C₁₆-Alkylen und b = 1 bis 100,
R³ und R⁴ unabhängig voneinander H, C₁-C₆-Alkyl oder C₅-C₁₀-Cycloalkyl bedeuten
c3) Verbindungen der Formel (IV) 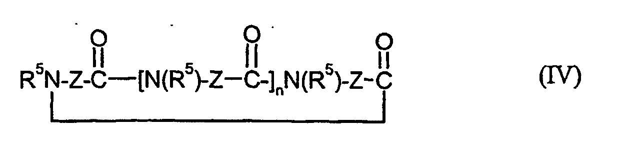 wobei
n 0 bis 10,
Z C₁-C₁₆-Alkylen, C₅-C₁₀-Cycloalkylen, Arylen oder (A-O)_{b}-A mit A = C₁-C₁₆-Alkylen und b = 1 bis 100,
R⁵ H, C₁-C₆-Alkyl oder C₅-C₁₀-Cycloalkyl bedeuten,
d) 0 bis 10 Gew.-%, bevorzugt 0,1 bis 5 Gew.-% weiteren üblichen Schlichtebestandteilen,
e) 0 bis 10 Gew.-%, bevorzugt 0 bis 5 Gew.-% Zusätzen zur Einstellung des pH-Wertes zwischen 3 und 10 und
f) Wasser als Rest auf 100 Gew. %.

2. Schlichtezusammensetzung gemäß Anspruch 1, **dadurch gekennzeichnet, dass** das Verhältnis von Komponente b) zur Komponente c) im Bereich von 10:1 bis 0,1:1 liegt.

3. Schlichtezusammensetzung gemäß Anspruch 1 oder 2, **dadurch gekennzeichnet, dass** der pH-Wert der Schlichtezusammensetzung zwischen 5 und 9, besonders bevorzugt bei 7 liegt.

4. Beschlichtete Glasfasern, **dadurch gekennzeichnet, dass** sie mit einer Schlichtezusammensetzung gemäß den Ansprüchen 1 bis 3 beschlichtet werden.

5. Verwendung der beschlichteten Glasfasern gemäß Anspruch 4 zur Verstärkung von thermoplastischen und duroplastischen Polymeren.

## Claims

1. Size composition for glass fibres, having a pH of between 3 and 10 and composed of:
a) 0.1 to 20 wt. % of polyepoxy, polyether, polyolefin, polyvinyl acetate, polyacrylate or polyurethane resins or mixtures thereof as film formers,
b) 0.1 to 10 wt. % of organo-functional silanes as coupling agents,
c) 0.1 to 10 wt. % of water-soluble or -dispersible, oligomeric or polymeric compounds having amino and/or amido groups from c1), c2) and/or c3)
c1) reaction product of polyamines of the formula (I) with acrylate compounds of the formula (II)
HN(R¹)-(Z-NH-)ₐR² (I)
where
Z is C₁-C₁₆ alkylene, C₅-C₁₀ cycloalkylene, arylene or (A-O)_{b}-A with A = C₁-C₁₆ alkylene and b = 1 to 100,
R¹ and R² independently of one another are H, C₁-C₁₈ alkyl or C₅-C₁₀ cycloalkyl and
a is 1 to 10 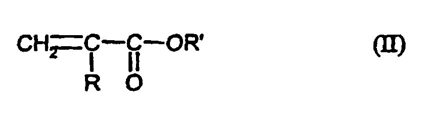
where
R is H or CH₃,
R' is C₁-C₆ alkyl, aryl or C₅-C₁₀ cycloalkyl
c2) compounds of the formula (III) 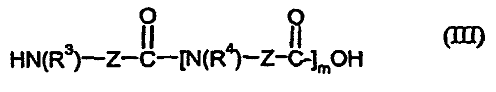 where
m is 0 to 50
Z is C₁-C₁₆ alkylene, C₅-C₁₀ cycloalkylene, arylene or (A-O)_{b}-A with A = C₁-C₁₆ alkylene and b = 1 to 100,
R³ and R⁴ independently of one another are H, C₁-C₆ alkyl or C₅-C₁₀cycloalkyl
c3) compounds of the formula (IV) 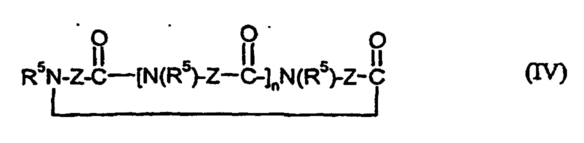 where
n is 0 to 10,
Z is C₁-C₁₆ alkylene, C₅-C₁₀ cycloalkylene, arylene or (A-O)_{b}-A with A = C₁-C₁₆ alkylene and b = 1 to 100,
R⁵ is H, C₁-C₆ alkyl or C₅-C₁₀ cycloalkyl,
d) 0 to 10 wt. %, preferably 0.1 to 5 wt. %, of other, customary size constituents,
e) 0 to 10 wt. %, preferably 0 to 5 wt. %, of additions to adjust the pH to between 3 and 10, and
f) water as remainder to 100 wt. %.

2. Size composition according to Claim 1, **characterized in that** the ratio of component b) to component c) is in the range from 10:1 to 0.1:1.

3. Size composition according to Claim 1 or 2, **characterized in that** the pH of the size composition is between 5 and 9, and with particular preference is 7.

4. Sized glass fibres, **characterized in that** they are sized with a size composition according to Claims 1 to 3.

5. Use of the sized glass fibres according to Claim 4 for reinforcing thermoplastic and thermoset polymers.

## Revendications

1. Composition d'ensimage pour fibres de verre, à un pH de 3 à 10 consistant en
a) 0,1 à 20 % en poids de résines de polyépoxydes, de polyéthers, de polyoléfines, d'acétate de polyvinyle, de polyacrylates ou de polyuréthannes ou leurs mélanges, en tant qu'agents filmogènes,
b) 0,1 à 10 % en poids de silanes organofonctionnels en tant qu'agents d'adhérence,
c) 0,1 à 10 % en poids de composés oligomères ou polymères à groupes amino et/ou amido, solubles ou dispersables dans l'eau, choisis parmi les composants c1), c2) et/ou c3 :
c1) un produit de réaction d'une polyamine de formule (I) et d'un dérivé d'acrylate de formule (II)
HN(R¹)-(Z-NH-)ₐR² (I)
dans laquelle
Z représente un groupe alkylène en C₁-C₁₆, cycloalkylène en C₅-C₁₀, arylène ou (A-O)_{b}-A avec A = alkylène en C₁-C₁₆ et b = 1 à 100,
R¹ et R² représentent chacun, indépendamment l'un de l'autre, H, un groupe alkyle en C₁-C₁₈ ou cycloalkyle en C₅-C₁₀ et
a est un nombre allant de 1 à 10 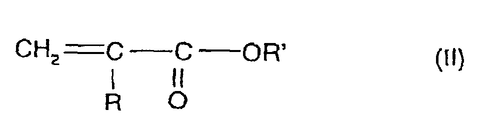 dans laquelle
R représente H, CH₃,
R' représente un groupe alkyle en C₁-C₆, aryle ou cycloalkyle en C₅-C₁₀,
c2) les composés de formule (III) 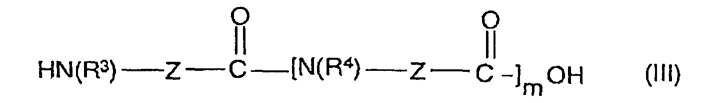 dans laquelle
m est un nombre allant de 0 à 50
Z représente un groupe alkylène en C₁-C₁₆, cycloalkylène en C₅-C₁₀, arylène ou (A-O)_{b}-A avec A = alkylène en C₁-C₁₆ et b = 1 à 100,
R³ et R⁴ représentent chacun, indépendamment l'un de l'autre, H, un groupe alkyle en C₁-C₆ ou cycloalkyle en C₅-C₁₀
c3) les composés de formule (IV) 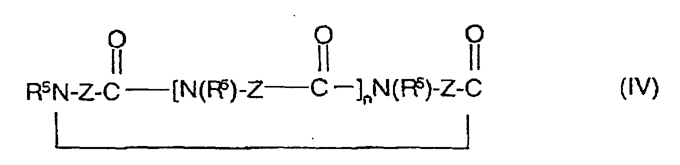 dans laquelle
n est un nombre allant de 0 à 10,
Z représente un groupe alkylène en C₁-C₁₆, cycloalkylène en C₅-C₁₀, arylène ou (A-O)_{b}-A avec A = alkylène en C₁-C₁₆ et b = à 1 à 100,
R⁵ représente H, un groupe alkyle en C₁-C₆ ou cycloalkyle en C₅-C₁₀,
d) 0 à 10 % en poids, de préférence 0,1 à 5 % en poids, d'autres constituants usuels des produits d'ensimage,
e) 0 à 10 % en poids, de préférence 0 à 5 % en poids, d'additifs servant à régler le pH entre 3 et 10, et
f) l'eau pour le solde à 100 % en poids.

2. Composition d'ensimage selon la revendication 1, **caractérisée en ce que** le rapport entre le composant b) et le composant c) se situe dans l'intervalle de 10:1 à 0,1:1.

3. Composition d'ensimage selon la revendication 1 ou 2, **caractérisée en ce que** le pH de cette composition se situe entre 5 et 9 et de préférence à 7.

4. Fibres de verre ensimées **caractérisées en ce qu'**elles ont été ensimées à l'aide d'une composition d'ensimage selon les revendications 1 à 3.

5. Utilisation des fibres de verre ensimées selon la revendication 4 pour renforcer des polymères thermoplastiques et duroplastiques.
